# EUROPÄISCHE PATENTSCHRIFT

(11) **EP 0 620 609 B1**
(45) Veröffentlichungstag und Bekanntmachung des Hinweises auf die Patenterteilung: **06.08.1997**
(21) Anmeldenummer: 94104029.7
(22) Anmeldetag: 16.03.1994
(51) Int. Cl.: H01M 8/24, H01M 8/02

(54) **Elektrochemische Mehrzellenbatterie**
Electrochemical multicell-battery
Batterie électrochimique à structure multicellulaire

(30) Priorität: 26.03.1993 DE 4309976
(43) Veröffentlichungstag der Anmeldung: 19.10.1994
(73) Patentinhaber: DAIMLER-BENZ AKTIENGESELLSCHAFT, 70567 Stuttgart (DE)
(72) Erfinder: Schwab, Clemens, Dipl.-Ing., D-88048 Friedrichshafen (DE)

(56) Entgegenhaltungen:
- EP-A- 0 155 695
- DE-A- 3 321 984
- FR-A- 1 285 926
- GB-A- 2 039 954
- US-A- 4 124 478
- US-A- 4 769 297
- US-A- 5 002 841
- US-A- 5 110 691
- US-A- 5 187 025
- SAE JOURNAL, Bd.70, Nr.1, Januar 1962 Seiten 82 - 86 R. H. BLACKMER ET AL 'Ion-exchange membrane'
- PATENT ABSTRACTS OF JAPAN vol. 11, no. 70 (E-485) (2517) 3. März 1987 & JP-A-61 225 779 (SHIN KOBE ELECTRIC MACH CO LTD) 7. Oktober 1986
- PATENT ABSTRACTS OF JAPAN vol. 11, no. 73 (E-486) (2520) 5. März 1987 & JP-A-61 230 273 (SANYO ELECTRIC CO LTD) 14. Oktober 1986
- PATENT ABSTRACTS OF JAPAN vol. 11, no. 95 (E-492) (2542) 25. März 1987 & JP-A-61 248 368 (MITSUBISHI ELECTRIC CORP) 5. November 1986

## Beschreibung

Die Erfindung betrifft eine elektrochemische Mehrzellenbatterie mit Polymerelektrolytmembranen, welche insbesondere durch hohe Leistungsdichten gekennzeichnet ist.

Für viele Anwendungen ist es erforderlich nach konstruktiven und werkstoffspezifischen Lösungen zu suchen, welche die derzeitig verfügbare volumenbezogene Leistungsdichte von rund 180 W/l deutlich erhöhen. Für eine erfolgreiche Akzeptanz auf dem Energiewandlermarkt genügt nicht allein die Umweltfreundlichkeit der Anlage, sondern sie muß auch in Masse und Bauvolumen gegenüber bisherigen Systemen mit fossilen Energieträgern konkurrenzfähig sein.

Die konstruktiven und stofflichen Grenzen einer elektrochemischen Mehrzellenbatterie werden einmal gesetzt durch die erreichbare energetisch sinnvolle Leistungsdichte der Polymerelektrolytmembran (derzeit bei H₂/Luft-Betrieb bei etwa 1 W/cm²), welche die Größe der Reaktionsfläche vorschreibt, zum anderen die mechanischen Anforderungen an Festigkeit, Stabilität und Dichtigkeit und die elektrischen Einflußfaktoren wie spezifische Widerstände und Kontaktwiderstände sowie die chemische und thermische Beständigkeit der verwendeten Materialien.

Da der Wirkungsgrad bei der Energieumwandlung von elektrochemischen Mehrzellenbatterien unter 100 % liegt, kommt der Kühlung der Zelle eine große Bedeutung zu. Um eine hohe Leistungsdichte zu erzielen, muß neben einer leichtgewichtigen Bauausführung eine möglichst homogene Kühlung gewährleistet werden.

Dies hat zur Folge, daß auf engsten Raum möglichst viel Kühlmittelmasse erforderlich ist und vermehrte Umwälzung durch eine verlustarme Strömungsgeometrie stattfinden muß.

Analog gelten für die Gasräume in elektrochemischen Zellen gleiche Folgerungen. Hier ist die Masse an Gas und dessen gleichmäßige Verteilung im Bereich der Reaktionsfläche und der angrenzenden Kanäle ein Maß für die Leistungsfähigkeit und Dynamik der Zelle, um auf schnelle Änderungen des Leistungsbedarfs der angeschlossenen Verbraucher zu reagieren. Desweiteren wird bei größeren Druckverlusten in den Kanälen, durch die dadurch benötigten höheren Verdichterleistungen für die Reaktanten, die Energieausbeute des Systems verringert.

Bei aktuellen Ausführungen wird die Bipolare Platte (stromleitende Platte, welche auf der einen Fläche den Wasserstoffgasraum und auf der gegenüberliegenden Fläche den Luftraum eingearbeitet hat) vollständig aus einem elektrisch leitenden und korrosionsstabilen Material, wie z.B. Graphit, hergestellt. Eine wesentliche Anforderung an die Konstruktion einer elektrochemischen Mehrzellenbatterie sind neben der Leistungsdichte auch die Herstellkosten, die durch die Menge und Verarbeitung des verwendeten Materials bestimmt werden.

Zur Gewährleistung eines effektiven und sicheren Betriebes der elektrochemischen Mehrzellenbatterie ist es notwendig, auch unter verschiedenen Betriebszuständen wie variablen Druck und Temperatur, einen homogenen Anpreßdruck der Platten aufeinander und eine ausreichende Dichtigkeit zueinander zu ermöglichen. Bisherige praktische Umsetzungen dieser Anforderungen zielen dahin, Anordnungen von Tellerfederpaketen koaxial auf den Zugankerschrauben und eventuell zusätzlich eine hydraulische oder pneumatische Druckeinheit im Flächenzentrum der Endplatten unterzubringen. Andere Lösungen sind federnde Draht oder Blechstrukturen, die in den Kühlmittelräumen die Druckspannungen und den elektrischen Strom weiterleiten.

Das Dokument EP-A-0155695 beschreibt eine Zelle, bei der die einzelnen Komponenten in Kunststoffrahmen eingebettet sind. Gaszuleitungen und Bohrangen für Zugankerschrauben sind im Rahmen untergebracht.

Aufgabe der Erfindung ist es, eine elektrochemische Mehrzellenbatterie mit Polymerelektrolytenmembranen zu schaffen, die eine wesentlich höhere Leistungsdichte durch eine optimierte Bauweise bei gleichzeitiger Berücksichtigung der sonstigen Anforderungen an eine elektrochemische Mehrzellenbatterie aufweist, als bestehende Ausführungen.

Diese Aufgabe der Erfindung wird durch den Gegenstand des Anspruchs gelöst.

Anhand von zwei Figuren wird der Gegenstand der Erfindung näher erläutert.

Es zeigen:
- Fig. 1: einen Querschnitt einer bipolaren Platte,
- Fig. 2: eine Mehrzellenbatterie.

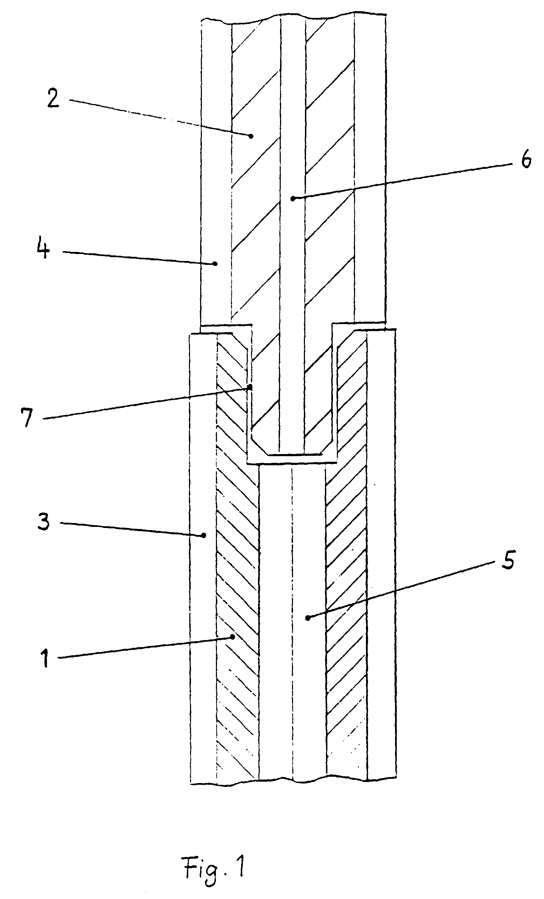

Die Bipolare Platte der elektrochemischen Zelle besteht aus einem Rahmen **2** aus einem Kunststoff, wie z.B. Polycarbonat, und zwei stromleitenden Platten **1**, z.B. aus Graphit oder Titan; Fig. 1 zeigt einen Querschnitt dieser Platteneinheit. In den Kunststoffrahmen **2** sind die Gasversorgungskanäle und Gasverteilung mittels Vorkammern **4**, die Kühlmittelversorgung und Verteilung **6** und die Führungen für die Zugankerschraube integriert. Dieser Rahmen wird zwischen die gegeneinander gelegten stromleitenden Platten **1** mit Hilfe einer Dichtungsmasse oder Klebstoffes **7** elastisch eingeklebt. Die stromleitenden Platten **1** entsprechen in ihren Außenabmessungen der Größe der Reaktionsfläche und haben jeweils auf einer Seite einen Gasraum **3** und auf der anderen Seite einen Raum für das Kühlmittel **5** vorgesehen. Die Abdichtung zu den beidseitigen folgenden Membran/Elektrodeneinheiten, innerhalb der Mehrzellenbatterie, erfolgt über Flachdichtungen aus einem Elastomer, wie z.B. Silikonkautschuk. Einen großen Vorteil bietet das Rahmenkonzept durch seine nach außen hin elektrisch und thermisch isolierenden Eigenschaften. Es treten keine spannungsführenden Teile der Bipolaren Platten an die Oberfläche der Mehrzellenbatterie und die thermische Isolierung unterstützt die gleichmäßige Temperaturverteilung über die Reaktionsfläche im Inneren.

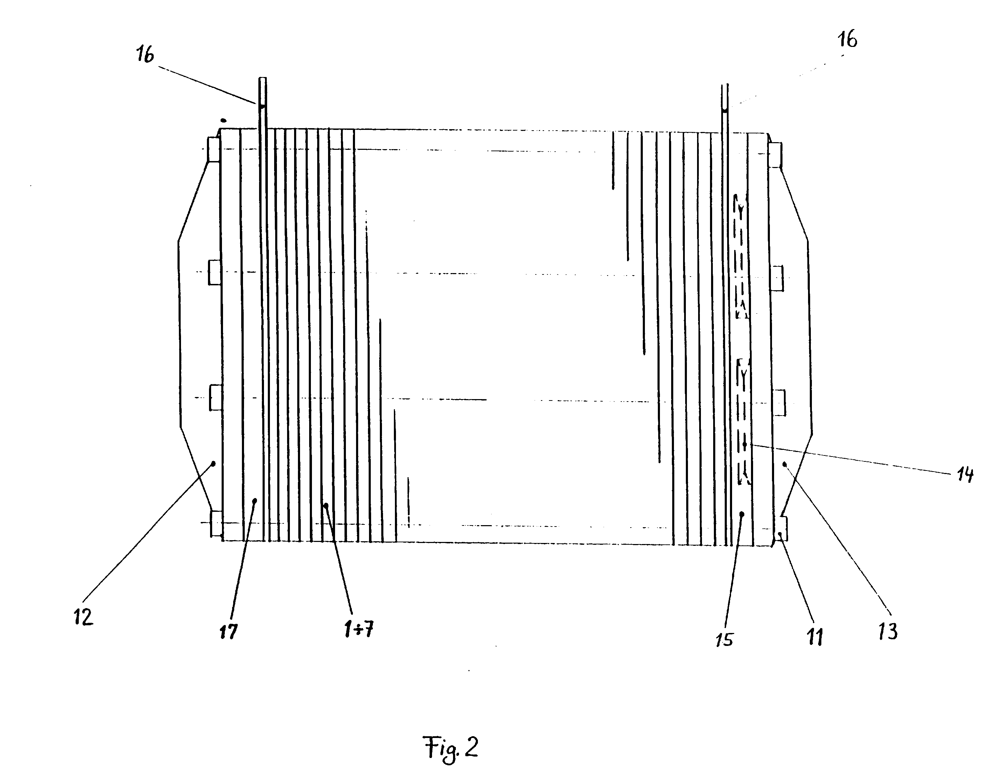

Als zweites erfindungsgemäßes Konstruktionsdetail ist die Verspannung der Mehrzellenbatterie in Fig. 2 dargestellt. Die Krafteinleitung erfolgt über das Anzugsmoment der Zugankerschrauben **11**. Durch die Endplatte **13** weiter über die Druckelemente **14**, werden die einzelnen unterschiedlichen Platten zwischen die Endplatten **12** und **13** zusammengepreßt. Die Druckelemente **14**, wie z.B. Tellerfedern, dienen hierbei zur Erhaltung der Druckspannung, innerhalb eines durch die Federkennlinie gekennzeichneten tolerierbaren Kraft-Weg-Bereiches, bei unterschiedlicher Ausdehnung der Materialien durch Erwärmung oder Aufquellung.

Desweiteren ist die Isolierplatte **15** und die Stromabgriffplatte **16** neben ihrer der Bezeichnung nach zu folgenden Aufgabe auch hinsichtlich einer egalisierten flächigen Verteilung, der von den Druckelementen **14** übertragenen Druckkraft, im Einsatz.

Durch die flächenzentral angeordneten Druckelemente **14** gelingt es, die Druckkraft auf die Bipolaren Platten derart zu verteilen, daß die Gefahr der Ablösung des Kontaktes zu den folgenden Platten durch den inneren Überdruck verhindert wird.
Die Isolierplatte **17** hat neben der elektrischen Isolierung die Aufgabe, die ab- und ankommenden Fluid- und Gasströme zwischen den Anschlüssen **18** und den Hauptversorgungskanälen der Bipolaren Platten zu leiten.
Bei den Stromabgriffplatten **16** konnte durch die Verwendung elektrisch hochleitfähigen Materialien die Dicke und damit das Gewicht weiter reduziert werden, zusätzlich wird bei diesen Platten mit einer Edelmetallbeschichtung der Kontaktwiderstand verringert.
Durch eine konsequente Anwendung von Kunststoffen und eine optimale Gestaltung, in der Hauptsache bei den Endplatten **12** und **13** sowie den Rahmen **2**, konnte die Masse der Mehrzellenbatterie erheblich reduziert werden.

Typische Leistungen der elektrochemischen Mehrzellenbatterie bewegen sich in dem Bereich von 1 bis 100 kW, mit 5 bis 200 Zellen pro Batterie. Leistungsdichte über 500 W/kg und über 500 W/dm³ können erreicht werden. Als Reaktionsgase können sowohl Wasserstoff als auch Reformergas beziehungsweise Sauerstoff oder Luft verwendet werden.

## Patentansprüche

1. Elektrochemische Mehrzellenbatterie mit Polymerelektrolytmembranen, mit einer hintereinander angeordneten ersten Endplatte (12), einer ersten Isolierplatte (17), einer ersten Stromabgriffsplatte (16), mehreren in Rahmenbauweise ausgeführten bipolaren Platten, einer zweiten Stromabgriffsplatte (16), einer zweiten Isolierplatte (15) und einer zweiten Endplatte (13), die mit Hilfe von in den Rahmen (2) der bipolaren Platten und die Platten (12,13,15-17) integrierten Zugankerschrauben (11) gegeneinander verspannt sind, wobei die bipolaren Platten durch zwei elektrisch leitende Platten (1) und einen Rahmen aus Kunststoff gebildet werden, der zwischen die gegeneinandergelegten stromleitenden Platten mit Hilfe einer Dichtungsmasse oder Klebstoffes (7) elastisch eingeklebt ist, wobei zwischen den Platten (1) eines Rahmens (2) ein Kühlraum (5) und auf der anderen Seite der Platten (1) jeweils ein Gasraum (3) ausgebildet ist, wobei Gas- und Kuhlmittelversorgungskanäle und Gas (4)- und Kuhlmittelvorkammern (6) in die Rahmen (2) integriert sind, und wobei in die erste Isolierplatte (17) Strukturen zur Verteilung der Reaktionsgase auf die Versorgungskanäle und in die zweite Isolierplatte (15) flächenzentral angeordnete Druckelemente (14) zur Aufrechterhaltung der homogenen Anpreßung der Platten (12, 13, 15-17) integriert sind.

## Claims

1. An electrochemical multi-cell battery with polymer electrolyte diaphragms with a serially disposed first end plate (12), a first insulating plate (17), a first current take-off plate (16), a plurality of framelike bipolar plates, a second current take-off plate (16), a second insulating plate (15) and a second end plate (13), which are clamped against one another by means of tie bolts (11) integrated into the frames (2) of the bipolar plates and the plates (12, 13, 15-17), the bipolar plates are formed by two electrically conductive plates (1) and a frame of synthetic plastics material, which is glued resiliently by means of a sealing composition or adhesive (7) between the current-conducting plates which are placed against one another, whereby a cooling space (5) is formed between the plates (1) of a frame (2) and, on the other side of the plates (1) a respective gas space (3) is formed, gas and coolant supply passages and gas (4) and coolant (6) antechambers being integrated into the frames (2), and whereby structures for distributing the reaction gases to the supply passages are integrated into the first insulating plate (17), while, for maintaining the homogeneous pressing-together of the plates (12,13,15-17), pressure elements (14) disposed centrally on the surface are integrated into the second insulating plate (15).

## Revendications

1. Batterie électrochimique à structure multicellulaire comportant des membranes électrolytiques formées d'un polymère et une première plaque d'extrémité (12), une première plaque isolante (17), une première plaque (16) de prélèvement de courant, plusieurs plaques bipolaires agencées en forme de cadres, une seconde plaque (16) de prélèvement de courant, une seconde plaque isolante (15) et une seconde plaque d'extrémité (13), qui sont disposées les unes à la suite des autres et sont serrées à l'aide de vis formant tirants d'ancrage (11) intégrées dans les cadres (2) des plaques bipolaires et dans les plaques (12,13,15-17), et dans laquelle les plaques bipolaires sont formées par deux plaques électriquement conductrices et par un cadre en matière plastique, qui est collé élastiquement entre les plaques conductrices, qui sont placées l'une contre l'autre, à l'aide d'une masse d'étanchéité ou d'un adhésif (7), et dans lequel une chambre de refroidissement (5) est formée entre les plaques (1) d'un cadre (2) et une chambre (3) contenant un gaz est formée sur l'autre face des plaques (1), et dans lequel des canaux d'alimentation en gaz et en fluide de refroidissement et des chambres amont (4) pour le gaz et des chambres amont (6) pour le fluide de refroidissement sont intégrées dans les cadres (2), et dans lequel des structures servant à répartir les gaz de réaction entre les canaux d'alimentation sont intégrées dans la première plaque isolante (17), et des éléments de compression (14), disposés en position centrée dans la surface et servant à maintenir la compression homogène des plaques (12,13,15-17) sont intégrés dans la seconde plaque isolante (15).
